# FASCICULE DE BREVET EUROPEEN

(11) **EP 3 730 401 B1**
(45) Date de publication et mention de la délivrance du brevet: **30.03.2022**
(21) Numéro de dépôt: 20170896.3
(22) Date de dépôt: 22.04.2020
(51) Int. Cl.: B64C 25/42, B60T 8/17

(54) **SYSTEME DE FREINAGE AUTOMATIQUE D'UN AERONEF**
AUTOMATISCHES BREMSSYSTEM EINES LUFTFAHRZEUGS
METHOD FOR AUTOMATIC BRAKING OF AN AIRCRAFT

(30) Priorité: 25.04.2019 FR 1904389
(43) Date de publication de la demande: 28.10.2020
(73) Titulaire: Safran Landing Systems, 78140 Vélizy-Villacoublay (FR)
(72) Inventeur: MOLINA AGRADANO, Maria Belen, 77550 MOISSY-CRAMAYEL (FR); RISSELIN, Louis Christian, 77550 MOISSY-CRAMAYEL (FR)
(74) Mandataire: Lavaud, Thomas

(56) Documents cités:
- EP-A1- 2 620 363
- EP-A1- 3 115 266
- GB-A- 1 246 926
- US-A- 3 920 204

## Description

### ARRIERE PLAN DE L'INVENTION

US 3 920 204 A décrit un système de freinage automatique d'un aéronef.

Un aéronef comporte classiquement un système de freinage de certaines roues de l'aéronef, qui sont appelées « roues freinées ». Le système de freinage comprend une pluralité de freins destinés chacun à freiner une roue freinée. Chaque frein comporte des organes de friction, par exemple une pile de disques de carbone, et des actionneurs qui appliquent un effort de freinage sur les organes de friction pour freiner la roue freinée et ralentir ainsi l'aéronef. Les actionneurs sont généralement des actionneurs hydrauliques ou électromécaniques.

Une fonction de freinage automatique (*Autobrake* en anglais) est mise en œuvre dans un aéronef comprenant un tel système de freinage. La fonction de freinage automatique contrôle automatiquement une commande de freinage automatique utilisée pour piloter les actionneurs des freins, de manière à conférer à l'aéronef un taux de décélération sélectionné sans intervention du pilote.

Le taux de décélération sélectionné peut être un taux particulier choisi par le pilote parmi une pluralité de taux de décélération prédéfinis, ou bien un taux de décélération calculé dynamiquement pendant l'atterrissage en fonction de la distance entre l'aéronef et une bretelle de sortie de piste sélectionnée, ou bien encore un taux de décélération maximum permis par la fonction de freinage automatique dans certains scénarios spécifiques comme une interruption de décollage ou une possible sortie de piste lors d'un atterrissage.

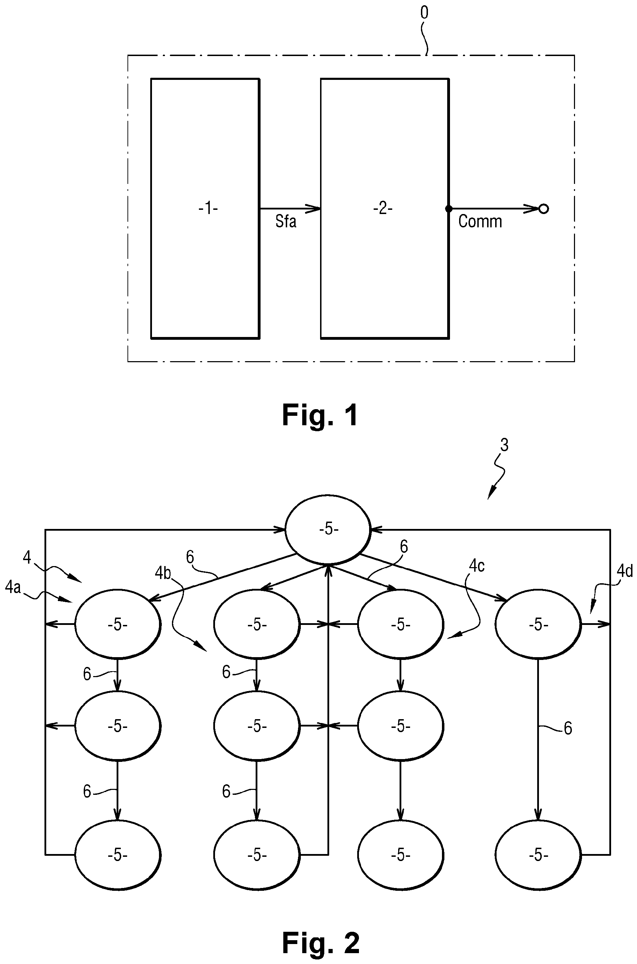

En référence à la figure 1, dans certains aéronefs, la fonction de freinage automatique 0 est mise en œuvre par un premier module fonctionnel 1 qui détermine un statut de freinage automatique Sfa, et par un deuxième module fonctionnel 2 qui calcule la commande de freinage automatique Comm en fonction du statut de freinage automatique Sfa.

En référence à la figure 2, le statut de freinage automatique est défini par une machine d'état 3. Le statut de freinage automatique correspond à l'état en cours, c'est-à-dire à l'instant présent, en temps réel, de la machine d'état 3.

La machine d'état 3 comporte autant de branches 4 que de taux de décélération définis dans la fonction de freinage automatique. Ainsi, la machine d'état 3 comporte ici quatre branches 4, qui chacune comprennent plusieurs états 5 définis en fonction d'un taux de décélération. La branche 4a est associée à un taux de décélération bas, la branche 4b est associée à un taux de décélération moyen, la branche 4c est associée à un taux de décélération élevé, et la branche 4d est associée à un taux de décélération maximum.

Cette manière de réaliser la fonction de freinage automatique soulève un certain nombre de difficultés.

Comme les états 5 dépendent chacun d'une valeur de taux de décélération, il est compliqué de modifier les taux de décélération ou d'en ajouter de nouveaux, car cela implique de modifier tous les états 5.

On sait par ailleurs que des valeurs distinctes de taux de décélération sont associées à chaque type ou famille d'aéronef (par exemple A320, A340, A380, A350). Ces valeurs dépendent des caractéristiques propres des aéronefs. Or, à nouveau, comme les états 5 de la machine d'état 3 sont définis en fonction des valeurs des taux de décélération, il est obligatoire de modifier tous les états 5 pour adapter une machine d'état 3, prévue initialement pour un type d'aéronef, à un autre type d'aéronef.

Par ailleurs, la définition de la machine d'état 3 nécessite une spécification complexe, contenant beaucoup de doublons, car la majeure partie des conditions des transitions 6 sont communes à toutes les branches 4. Une telle spécification est difficilement maintenable et très complexe à faire évoluer.

### OBJET DE L'INVENTION

L'invention a pour objet de fournir une fonction de freinage automatique plus simple et plus facile à maintenir, à faire évoluer, et à adapter en fonction du type d'aéronef dans lequel elle est utilisée.

### RESUME DE L'INVENTION

En vue de la réalisation de ce but, on propose un système de freinage automatique d'un aéronef, comportant des moyens d'acquisition de taux de décélération susceptibles d'être conférés à l'aéronef par le système de freinage automatique, et des modules fonctionnels distincts comprenant :
- un premier module fonctionnel agencé pour mettre en œuvre une machine d'état qui comporte une première branche comprenant des premiers états correspondant à un atterrissage de l'aéronef, une deuxième branche comprenant des deuxièmes états correspondant à une interruption de décollage de l'aéronef, et des transitions entre les premiers états et entre les deuxièmes états, les premiers états, les deuxièmes états et les transitions étant définis indépendamment des taux de décélération ;
- un deuxième module fonctionnel agencé pour définir une décélération cible de l'aéronef à partir au moins des taux de décélération et d'un état en cours de la machine d'état, ledit état en cours étant soit l'un des premiers états soit l'un des deuxièmes états ;
- un troisième module fonctionnel agencé pour définir, à partir au moins de l'état en cours et de la décélération cible, une commande de freinage automatique pour piloter des actionneurs de freins de roues de l'aéronef.

Ainsi, le premier module fonctionnel du système de freinage automatique selon l'invention définit un état en cours ou statut de freinage automatique. Le deuxième module fonctionnel, quant à lui, définit la décélération cible. Le premier module fonctionnel et le deuxième module fonctionnel sont deux modules fonctionnels distincts, de sorte qu'il est possible de modifier l'un sans modifier l'autre. Les premiers états, les deuxièmes états et les transitions ne dépendent pas des taux de décélération, de sorte qu'il est possible de modifier les taux de décélération sans modifier la machine d'état. La machine d'état comprend uniquement deux branches, et est donc relativement simple à spécifier et à concevoir.

On propose de plus un système de freinage automatique tel que celui qui vient d'être décrit, le système de freinage automatique étant agencé pour acquérir des paramètres externes générés à l'extérieur du système de freinage automatique et représentatifs d'un état de l'aéronef, les transitions dépendant de premières conditions définies à partir au moins des paramètres externes.

On propose en outre un système de freinage automatique tel que celui qui vient d'être décrit, dans lequel le deuxième module fonctionnel est agencé pour définir la décélération cible en utilisant aussi les paramètres externes.

On propose de plus un système de freinage automatique tel que celui qui vient d'être décrit, comprenant de plus un quatrième module fonctionnel agencé pour produire des paramètres consolidés à partir au moins des paramètres externes et d'un taux de décélération sélectionné choisi parmi les taux de décélération, la machine d'état comprenant au moins une transition dépendant de deuxièmes conditions définies à partir au moins des paramètres consolidés.

On propose en outre un système de freinage automatique tel que celui qui vient d'être décrit, dans lequel les premiers états comprennent un état désarmé, un premier état armé, un état pré-engagé, un premier état engagé, et un état maximal engagé.

On propose par ailleurs un système de freinage automatique tel que celui qui vient d'être décrit, dans lequel les deuxièmes états comprennent l'état désarmé, un deuxième état armé, et un deuxième état engagé.

On propose aussi un système de freinage automatique tel que celui qui vient d'être décrit, dans lequel une transition de l'état désarmé vers le premier état armé se produit lorsque l'aéronef est en vol avant l'atterrissage de l'aéronef et qu'un pilote de l'aéronef sélectionne un premier mode de freinage automatique correspondant à l'atterrissage de l'aéronef.

On propose de plus un système de freinage automatique tel que celui qui vient d'être décrit, dans lequel une transition du premier état armé vers l'état pré-engagé se produit lorsque l'aéronef touche le sol, et que des différences entre des vitesses d'une majorité des roues de l'aéronef et une vitesse de l'aéronef sont inférieures ou égales à un premier seuil de vitesse prédéterminé, et qu'un ordre de freinage automatique est reçu.

On propose en outre un système de freinage automatique tel que celui qui vient d'être décrit, dans lequel une transition de l'état pré-engagé vers le premier état engagé se produit lorsque l'aéronef est stabilisé au sol.

On propose aussi un système de freinage automatique tel que celui qui vient d'être décrit, dans lequel une transition de l'état pré-engagé ou du premier état engagé vers l'état maximal engagé se produit lorsqu'un risque de sortie de piste de l'aéronef est détecté, et dans lequel une transition de l'état maximal engagé vers le premier état engagé se produit lorsque ledit risque disparaît.

On propose de plus un système de freinage automatique tel que celui qui vient d'être décrit, dans lequel une transition de l'état désarmé vers le deuxième état armé se produit avant une course au décollage de l'aéronef lorsqu'un pilote de l'aéronef sélectionne un deuxième mode de freinage automatique correspondant à l'interruption de décollage de l'aéronef.

On propose de plus un système de freinage automatique tel que celui qui vient d'être décrit, dans lequel une transition du deuxième état armé vers le deuxième état engagé se produit lorsqu'un ordre de freinage automatique est reçu, et qu'une vitesse de l'aéronef est supérieure ou égale à un deuxième seuil de vitesse prédéterminé.

On propose aussi un système de freinage automatique tel que celui qui vient d'être décrit, dans lequel une transition de l'état pré-engagé ou du premier état engagé ou de l'état maximal engagé ou du deuxième état engagé vers l'état désarmé se produit lorsqu'un pilote de l'aéronef exerce une pression sur des pédales de freinage qui est supérieure à un seuil de pression prédéterminé, ou bien si l'aéronef décolle et que des atterrisseurs de l'aéronef ne touchent plus le sol.

On propose en outre un système de freinage automatique tel que celui qui vient d'être décrit, dans lequel une transition d'un état particulier quelconque appartenant aux premiers états ou aux deuxièmes états vers l'état désarmé se produit lorsqu'une défaillance d'un équipement contribuant à mettre en œuvre le freinage automatique se produit, ou bien lorsqu'un pilote de l'aéronef désactive manuellement le freinage automatique.

L'invention sera mieux comprise à la lumière de la description qui suit d'un mode de mise en œuvre particulier non limitatif de l'invention.

### BREVE DESCRIPTION DES DESSINS

Il sera fait référence aux dessins annexés, parmi lesquels :
[Fig. 1] la figure 1 représente un premier module fonctionnel et un deuxième module fonctionnel d'une fonction de freinage automatique de l'art antérieur ;
[Fig. 2] la figure 2 représente une machine d'état de la fonction de freinage automatique de l'art antérieur ;
[Fig. 3] la figure 3 représente un système de freinage automatique selon l'invention ;
[Fig. 4] la figure 4 représente une machine d'état mise en œuvre dans le système de freinage automatique selon l'invention ;
[Fig. 5] la figure 5 représente la machine d'état de la figure 4 et un quatrième module fonctionnel du système de freinage automatique selon l'invention.

### DESCRIPTION DETAILLEE DE L'INVENTION

L'invention est ici mise en œuvre dans un avion qui comporte un système de freinage hydraulique.

Le système de freinage hydraulique comprend une pluralité de freins destinés chacun à freiner une roue freinée de l'avion. Chaque frein comporte une pluralité d'actionneurs hydrauliques. Le système de freinage hydraulique comprend aussi un ou plusieurs calculateurs de freinage et un circuit hydraulique. Lorsqu'un pilote de l'avion produit une consigne de freinage manuelle en appuyant sur une pédale de freinage du cockpit, le ou les calculateurs de freinage transforment cette consigne de freinage manuelle en une commande de freinage manuelle qui pilote les actionneurs hydrauliques des freins des roues freinées via le circuit hydraulique. La commande de freinage manuelle est ici une commande en pression.

L'avion comprend aussi un système de freinage automatique selon l'invention, qui est connecté et coopère avec le système de freinage hydraulique. Le système de freinage automatique selon l'invention permet de conférer à l'avion et de maintenir un taux de décélération sélectionné sans aucune intervention du pilote.

Le système de freinage automatique comprend ici un ou plusieurs calculateurs, c'est-à-dire un ou plusieurs équipements comprenant des composants électriques, matériels (*hardware* en anglais), parmi lesquels on trouve des composants de traitement (microcontrôleurs, processeurs, FPGA, etc.) dans lesquels sont programmés un ou des logiciels (*software* en anglais).

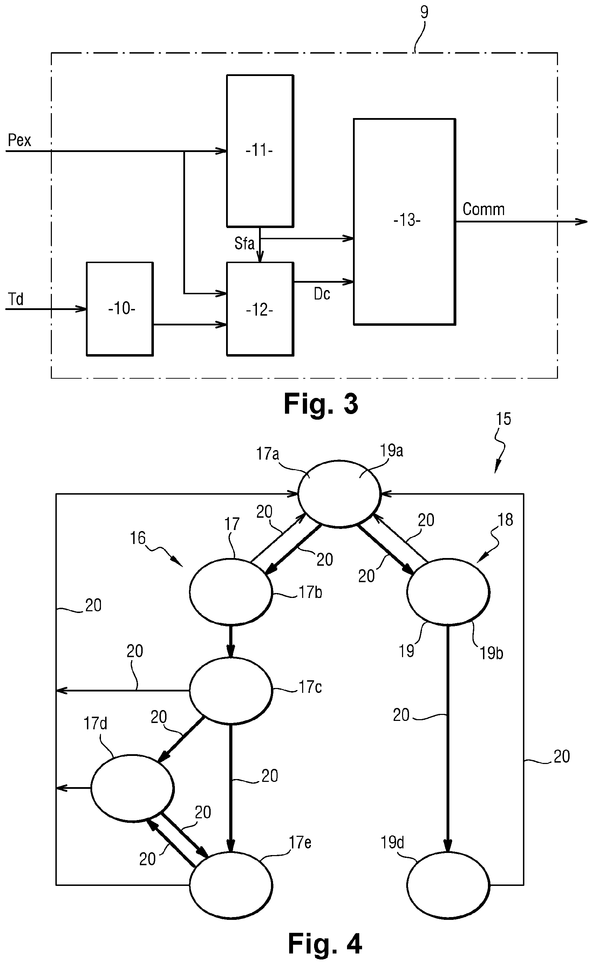

En référence à la figure 3, le système de freinage automatique selon l'invention 9 comprend ici des moyens d'acquisition 10 de taux de décélération Td, ainsi qu'un premier module fonctionnel 11, un deuxième module fonctionnel 12 et un troisième module fonctionnel 13. Les moyens d'acquisition 10 et les modules fonctionnels sont définis ici de manière fonctionnelle. Ils réalisent des sous-fonctions de la fonction de freinage automatique. Les sous-fonctions sont mises en œuvre par les composants *hardware* et *software* du ou des calculateurs du système de freinage automatique 9.

Les taux de décélération Td acquis par les moyens d'acquisition 10 comprennent par exemple le taux de décélération sélectionné (et donc effectivement utilisé dans le système de freinage automatique 9) et/ou des taux de décélération prédéfinis, et/ou des taux de décélération calculés dynamiquement, et/ou des taux de décélération maximums, etc.

Les moyens d'acquisition 10 peuvent par exemple comprendre une mémoire dans laquelle sont stockés les taux de décélération prédéfinis et les taux de décélération maximums, et/ou un récepteur de signaux qui acquiert le taux de décélération sélectionné ou les taux de décélération calculés dynamiquement.

Le premier module fonctionnel 11, le deuxième module fonctionnel 12 et le troisième module fonctionnel 13 sont distincts et sont définis selon des spécifications distinctes. Ils sont aussi « indépendants » : les modules fonctionnels sont reliés entre eux et échangent des données, mais ne comprennent pas de sous-module commun. Une modification ou une évolution de l'un des modules fonctionnels n'implique pas de modifier un autre module fonctionnel.

En référence à la figure 4, le premier module fonctionnel 11 met en œuvre une machine d'état 15 qui comporte une première branche 16 comprenant des premiers états 17 correspondant à un atterrissage de l'avion (*Landing Mode* en anglais), et une deuxième branche 18 comprenant des deuxièmes états 19 correspondant à une interruption de décollage de l'avion (*Rejected Take-Off,* ou RTO en anglais). Les premiers états 17 sont donc utilisés lorsqu'un premier mode de freinage automatique, correspondant à l'atterrissage de l'avion, est sélectionné, et les deuxièmes états 19 sont donc utilisés lorsqu'un deuxième mode de freinage automatique, correspondant à une interruption de décollage, est sélectionné.

Les premiers états 17 comprennent un état désarmé 17a, un premier état armé 17b, un état pré-engagé 17c, un premier état engagé 17d, et un état maximal engagé 17e. L'état maximal engagé 17e correspond à une commande de freinage automatique permettant de produire un effort de freinage maximal dans le cas d'une possible sortie de piste lors d'un atterrissage.

Les deuxièmes états 19 comprennent l'état désarmé 19a (identique à l'état désarmé 17a), un deuxième état armé 19b, et un deuxième état engagé 19d.

La machine d'état 15 comprend de plus des transitions 20 entre les premiers états 17 et entre les deuxièmes états 19.

Les premiers états 17, les deuxièmes états 19 et les transitions 20 sont définis indépendamment des taux de décélération Td acquis par les moyens d'acquisition 10.

Les transitions 20 dépendent de premières conditions définies à partir au moins de paramètres externes Pex. Les paramètres externes Pex sont générés à l'extérieur du système de freinage automatique 9, par exemple par des capteurs de l'avion, et sont acquis par le système de freinage automatique 9.

Les paramètres externes Pex sont représentatifs d'un état de l'avion. Les paramètres externes Pex comprennent des données mesurées ou estimées et caractérisent l'état de l'avion. Les paramètres externes Pex sont représentatifs par exemple de la vitesse de l'avion, des vitesses des roues de l'avion, d'un risque d'une sortie de piste de l'avion, de la survenue d'une interruption de décollage, d'une position au sol ou en vol de l'avion, etc.

L'acquisition des paramètres externes Pex est réalisée via l'acquisition de variables représentatives des valeurs desdits paramètres externes.

Ainsi, dans le cas nominal d'un atterrissage de l'avion, une transition 20 de l'état désarmé 17a vers le premier état armé 17b se produit lorsque l'avion est en vol avant son atterrissage et qu'un pilote de l'avion sélectionne un mode de freinage automatique valable, c'est à dire le premier mode de freinage automatique, qui correspond à l'atterrissage de l'avion. Les variables *In_Flight* et *Autobrake_Selection* (qui doit correspondre au premier mode de freinage automatique), acquises par le système de freinage automatique 9, permettent respectivement de vérifier que ces deux premières conditions sont remplies.

Une transition 20 du premier état armé 17b vers l'état pré-engagé 17c se produit lorsque l'avion touche le sol, et que des différences entre des vitesses d'une majorité des roues de l'avion et une vitesse de l'avion sont inférieures ou égales à un premier seuil de vitesse prédéterminé, et qu'un ordre de freinage automatique est reçu. Les variables *On_Ground, Global_Spun_Up* et *Autobrake_Activation,* acquises par le système de freinage automatique 9, permettent respectivement de vérifier que ces trois premières conditions sont remplies. La variable *Autobrake_Activation* apparaît ou prend une valeur correspondant à l'activation du freinage automatique lorsqu'un signal de spoiler déployé est produit ou lorsque qu'un levier moteur se trouve en position *idle.*

Une transition 20 de l'état pré-engagé 17c vers le premier état engagé 17d se produit lorsque l'avion est stabilisé au sol. La variable *Nose_On_Ground,* acquise par le système de freinage automatique 9, permet de vérifier que cette première condition est remplie. Cette variable apparaît ou prend une valeur correspondant à la stabilisation de l'avion lorsqu'un signal de train avant posé, indiquant que l'atterrisseur auxiliaire (avant) est posé, est reçu et confirmé.

Une transition 20 de l'état pré-engagé 17c ou du premier état engagé 17d vers l'état maximal engagé 17e se produit lorsqu'un risque de sortie de piste de l'avion est détecté (variable *Runway_Overrun_Protection*). Une transition 20 de l'état maximal engagé 17e vers le premier état engagé 17d se produit lorsque ledit risque disparaît (disparition de la variable *Runway_Overrun_Protection)*.

Dans le cas d'une interruption de décollage, une transition 20 de l'état désarmé 19a vers le deuxième état armé 19b se produit avant une course au décollage de l'avion lorsqu'un pilote de l'avion sélectionne un mode de freinage automatique valable, c'est à dire le deuxième mode de freinage automatique, qui correspond à l'interruption de décollage de l'avion.

Les variables *On_Ground* (ou bien *not In_Flight*) et *Autobrake_Selection* (qui doit correspondre au deuxième mode de freinage automatique), acquises par le système de freinage automatique 9, permettent de vérifier que ces premières conditions sont remplies.

Une transition 20 du deuxième état armé 19b vers le deuxième état engagé 19d se produit lorsqu'un ordre de freinage automatique est reçu, et qu'une vitesse de l'avion est supérieure ou égale à un deuxième seuil de vitesse prédéterminé. Les variables *Autobrake_Activation* et *Aircraft_Speed* sont respectivement utilisées. La variable *Autobrake_Activation* apparaît ou prend une valeur correspondant à l'activation du freinage automatique lorsqu'un signal de spoiler déployé est produit ou lorsque qu'un levier moteur se trouve en position *idle.*

Dans le premier mode de freinage automatique et dans le deuxième mode de freinage automatique, une transition 20 de l'état pré-engagé 17c ou du premier état engagé 17d ou de l'état maximal engagé 17e ou du deuxième état engagé 19d vers l'état désarmé 17a, 19a se produit lorsqu'un pilote de l'avion reprend un contrôle manuel du freinage en exerçant une pression sur les pédales de freinage qui est supérieure à un seuil de pression prédéterminé, ou bien si l'avion décolle et que les atterrisseurs principaux de l'avion ne touchent plus le sol. Pour cette dernière condition, la variable *Main_Landing_Gear_On_Ground* est utilisée.

Dans le premier mode de freinage automatique et dans le deuxième mode de freinage automatique, une transition 20 d'un état particulier quelconque appartenant aux premiers états 17 ou aux deuxièmes états 19 vers l'état désarmé 17a, 19a se produit lorsqu'une défaillance d'un équipement contribuant à mettre en œuvre le freinage automatique se produit, ou bien lorsqu'un pilote de l'avion désactive manuellement le freinage automatique.

Pour la défaillance, la variable *Autobrake_Fault* est utilisée. La défaillance est calculée dans un module externe qui prend en compte l'invalidité des signaux utilisés dans la fonction de freinage automatique, la perte de performance et l'asymétrie du freinage. Pour la désactivation manuelle, la variable *Autobrake_Selection* est utilisée (la désactivation est détectée lorsque cette variable prend la valeur *OFF).*

Le premier module fonctionnel 11 a comme sortie un statut de freinage automatique Sfa (variable *Autobrake*), qui correspond à un état en cours de la machine d'état 15. L'état en cours est soit l'un des premiers états 17 soit l'un des deuxièmes états 19. L'état en cours évolue en temps réel en fonction de la réalisation des premières conditions dont dépendent les transitions 20.

Le deuxième module fonctionnel 12 définit une décélération cible Dc de l'avion à partir au moins des taux de décélération Td, de l'état en cours de la machine d'état 15, et des paramètres externes Pex. Le deuxième module fonctionnel 12 génère la décélération cible Dc de manière à atteindre le taux de décélération sélectionné en un minimum de temps, tout en assurant le confort des passagers de l'avion.

Le troisième module fonctionnel 13, quant à lui, est utilisé pour générer, à partir au moins de l'état en cours et de la décélération cible Dc, une commande de freinage automatique Comm pour piloter les freins des roues de l'avion. La commande de freinage automatique Comm est ici une commande en pression.

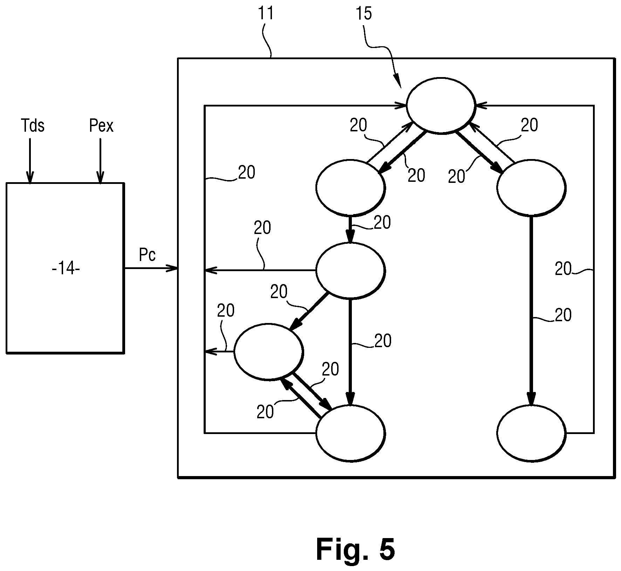

En référence à la figure 5, le système de freinage automatique selon l'invention 9 peut aussi comprendre un quatrième module fonctionnel 14. Le quatrième module fonctionnel 14 est optionnel.

Dans le cas où le quatrième module fonctionnel 14 est utilisé, il est positionné en entrée du premier module fonctionnel 11. Le quatrième module fonctionnel 14 est utilisé pour produire des paramètres consolidés Pc à partir au moins des paramètres externes Pex et des taux de décélération Td, et, en particulier, à partir du taux de décélération sélectionné Tds (qui est l'un des taux de décélération Td et qui a été choisi par le pilote ou de manière automatique par un système de l'avion).

Le quatrième module fonctionnel 14 est utilisé dans des cas bien particuliers dans lesquels le passage d'un état 17, 19 à l'autre dépend nécessairement du taux de décélération sélectionné Tds.

Pour éviter que les transitions 20 ne dépendent directement du taux de décélération sélectionné Tds, on fait dépendre les transitions 20 de deuxièmes conditions définies à partir des paramètres consolidés Pc.

Ainsi, par exemple, dans certains types ou familles d'avions, certains des paramètres externes Pex qui viennent d'être évoqués, représentatifs de l'état de l'avion, ne sont pas disponibles. Le quatrième module fonctionnel 14 remplace alors ces paramètres externes Pex par des valeurs qui dépendent du taux de décélération sélectionné Tds, et produit ainsi les paramètres consolidés Pc.

De même, par exemple, dans le cas de taux de décélération variables en fonction de la bretelle de sortie sélectionnée, le taux de décélération sélectionné Tds est calculé dynamiquement par un module externe. Le quatrième module fonctionnel 14 ne se base pas uniquement sur des paramètres externes Pex issus de capteurs, mais consolide les paramètres externes en fonction du taux de décélération sélectionné Tds pour obtenir les paramètres consolidés Pc.

Le quatrième module fonctionnel 14 transmet alors les paramètres consolidés Pc au premier module fonctionnel 11. Les paramètres consolidés Pc sont utilisés pour définir les deuxièmes conditions dont dépendent les transitions 20.

Bien entendu, l'invention n'est pas limitée au mode de réalisation décrit mais englobe toute variante entrant dans le champ de l'invention telle que définie par les revendications.

On a décrit ici que le système de freinage automatique selon l'invention coopère avec un système de freinage hydraulique. Le système de freinage automatique selon l'invention pourrait coopérer avec un système de freinage différent, par exemple un système de freinage électrique. Le système de freinage automatique peut parfaitement être intégré dans le système de freinage hydraulique ou électrique et, en particulier, être mis en œuvre dans un ou plusieurs calculateurs de freinage du système de freinage hydraulique ou électrique.

La commande de freinage automatique n'est bien sûr pas nécessairement une commande en pression, mais pourrait être une commande différente, par exemple en courant (dans le cas d'un système de freinage électrique), en couple, en déplacement des poussoirs des actionneurs, etc.

## Revendications

1. Système de freinage automatique d'un aéronef, comportant des moyens d'acquisition (10) de taux de décélération (Td) susceptibles d'être conférés à l'aéronef par le système de freinage automatique (9), et des modules fonctionnels distincts comprenant :
- un premier module fonctionnel (11) agencé pour mettre en œuvre une machine d'état (15) qui comporte une première branche (16) comprenant des premiers états (17) correspondant à un atterrissage de l'aéronef, une deuxième branche (18) comprenant des deuxièmes états (19) correspondant à une interruption de décollage de l'aéronef, et des transitions (20) entre les premiers états (17) et entre les deuxièmes états (19) , les premiers états, les deuxièmes états et les transitions étant définis indépendamment des taux de décélération ;
- un deuxième module fonctionnel (12) agencé pour définir une décélération cible (Dc) de l'aéronef à partir au moins des taux de décélération et d'un état en cours de la machine d'état (15), ledit état en cours étant soit l'un des premiers états (17) soit l'un des deuxièmes états (19)
- un troisième module fonctionnel (13) agencé pour définir, à partir au moins de l'état en cours et de la décélération cible, une commande de freinage automatique (Comm) pour piloter des actionneurs de freins de roues de l'aéronef.

2. Système de freinage automatique selon la revendication 1, le système de freinage automatique (9) étant agencé pour acquérir des paramètres externes (Pex) générés à l'extérieur du système de freinage automatique (9) et représentatifs d'un état de l'aéronef, les transitions (20) dépendant de premières conditions définies à partir au moins des paramètres externes (Pex).

3. Système de freinage automatique selon la revendication 2, dans lequel le deuxième module fonctionnel (12) est agencé pour définir la décélération cible (Dc) en utilisant aussi les paramètres externes (Pex).

4. Système de freinage automatique selon la revendication 2, comprenant de plus un quatrième module fonctionnel (14) agencé pour produire des paramètres consolidés (Pc) à partir au moins des paramètres externes (Pex) et d'un taux de décélération sélectionné (Tds) choisi parmi les taux de décélération (Td), la machine d'état (15) comprenant au moins une transition (20) dépendant de deuxièmes conditions définies à partir au moins des paramètres consolidés (Pc).

5. Système de freinage automatique selon l'une des revendications précédentes, dans lequel les premiers états (17) comprennent un état désarmé (17a), un premier état armé (17b), un état pré-engagé (17c), un premier état engagé (17d), et un état maximal engagé (17e).

6. Système de freinage automatique selon l'une des revendications précédentes, dans lequel les deuxièmes états (19) comprennent l'état désarmé, un deuxième état armé (19b), et un deuxième état engagé (19d).

7. Système de freinage automatique selon la revendication 5, dans lequel une transition (20) de l'état désarmé (17a) vers le premier état armé (17b) se produit lorsque l'aéronef est en vol avant l'atterrissage de l'aéronef et qu'un pilote de l'aéronef sélectionne un premier mode de freinage automatique correspondant à l'atterrissage de l'aéronef.

8. Système de freinage automatique selon la revendication 5, dans lequel une transition (20) du premier état armé (17b) vers l'état pré-engagé (17c) se produit lorsque l'aéronef touche le sol, et que des différences entre des vitesses d'une majorité des roues de l'aéronef et une vitesse de l'aéronef sont inférieures ou égales à un premier seuil de vitesse prédéterminé, et qu'un ordre de freinage automatique est reçu.

9. Système de freinage automatique selon la revendication 5, dans lequel une transition (20) de l'état pré-engagé (17c) vers le premier état engagé (17d) se produit lorsque l'aéronef est stabilisé au sol.

10. Système de freinage automatique selon la revendication 5, dans lequel une transition (20) de l'état pré-engagé (17c) ou du premier état engagé (17d) vers l'état maximal engagé (17e) se produit lorsqu'un risque de sortie de piste de l'aéronef est détecté, et dans lequel une transition de l'état maximal engagé (17e) vers le premier état engagé (17d) se produit lorsque ledit risque disparaît.

11. Système de freinage automatique selon la revendication 6, dans lequel une transition (20) de l'état désarmé (19a) vers le deuxième état armé (19b) se produit avant une course au décollage de l'aéronef lorsqu'un pilote de l'aéronef sélectionne un deuxième mode de freinage automatique correspondant à l'interruption de décollage de l'aéronef.

12. Système de freinage automatique selon la revendication 6, dans lequel une transition (20) du deuxième état armé (19b) vers le deuxième état engagé (19d) se produit lorsqu'un ordre de freinage automatique est reçu, et qu'une vitesse de l'aéronef est supérieure ou égale à un deuxième seuil de vitesse prédéterminé.

13. Système de freinage automatique selon les revendications 5 et 6, dans lequel une transition de l'état pré-engagé (17c) ou du premier état engagé (17d) ou de l'état maximal engagé (17e) ou du deuxième état engagé (19d) vers l'état désarmé (17a) se produit lorsqu'un pilote de l'aéronef exerce une pression sur des pédales de freinage qui est supérieure à un seuil de pression prédéterminé, ou bien si l'aéronef décolle et que des atterrisseurs de l'aéronef ne touchent plus le sol.

14. Système de freinage automatique selon les revendications 5 et 6, dans lequel une transition d'un état particulier quelconque appartenant aux premiers états (17) ou aux deuxièmes états (19) vers l'état désarmé (17a) se produit lorsqu'une défaillance d'un équipement contribuant à mettre en œuvre le freinage automatique se produit, ou bien lorsqu'un pilote de l'aéronef désactive manuellement le freinage automatique.

## Patentansprüche

1. Automatisches Bremssystem eines Luftfahrzeugs, umfassend Erfassungsmittel (10) zum Erfassen von Geschwindigkeitsverringerungsraten (Td), die dazu geeignet sind, dem Luftfahrzeug durch das automatische Bremssystem (9) auferlegt zu werden, und getrennte funktionale Module, umfassend:
- ein erstes funktionales Modul (11), das ausgebildet ist, um eine Zustandsmaschine (15) zu implementieren, die einen ersten Zweig (16) umfasst, der erste Zustände (17) enthält, die einer Landung des Luftfahrzeugs entsprechen, einen zweiten Zweig (18), der zweite Zustände (19) enthält, die einem Startabbruch des Luftfahrzeugs entsprechen, sowie Übergänge (20) zwischen den ersten Zuständen (17) und zwischen den zweiten Zuständen (19), wobei die ersten Zustände, die zweiten Zustände und die Übergänge unabhängig von den Geschwindigkeitsverringerungsraten definiert sind;
- ein zweites funktionales Modul (12), das ausgebildet ist, um eine Zielgeschwindigkeitsverringerung (Dc) des Luftfahrzeugs anhand mindestens der Geschwindigkeitsverringerungsraten und einem aktuellen Zustand der Zustandsmaschine (15) zu definieren, wobei der aktuelle Zustand entweder einer der ersten Zustände (17) oder einer der zweiten Zustände (19) ist,
- ein drittes funktionales Modul (13), das ausgebildet ist, um anhand mindestens des aktuellen Zustandes und der Zielgeschwindigkeitsverringerung einen automatischen Bremsbefehl (Comm) zu definieren, um die Bremsaktoren der Räder des Luftfahrzeugs zu steuern.

2. Automatisches Bremssystem nach Anspruch 1, wobei das automatische Bremssystem (9) so ausgebildet ist, dass es externe Parameter (Pex) erfasst, die außerhalb des automatischen Bremssystems (9) erzeugt werden und repräsentativ für einen Zustand des Luftfahrzeugs sind, wobei die Übergänge (20) von ersten Bedingungen abhängen, die mindestens anhand der externen Parameter (Pex) definiert sind.

3. Automatisches Bremssystem nach Anspruch 2, bei dem das zweite funktionale Modul (12) ausgebildet ist, um die Zielgeschwindigkeitsverringerung (Dc) zu definieren, indem auch die externen Parameter (Pex) verwendet werden.

4. Automatisches Bremssystem nach Anspruch 2, ferner umfassend ein viertes funktionales Modul (14), das ausgebildet ist, um konsolidierte Parameter (Pc) anhand mindestens der externen Parameter (Pex) und einer unter den Geschwindigkeitsverringerungsraten (Td) ausgewählten Geschwindigkeitsverringerungsrate (Tds) zu erzeugen, wobei die Zustandsmaschine (15) mindestens einen Übergang (20) umfasst, der von zwei Bedingungen abhängt, die anhand mindestens der konsolidierten Parameter (Pc) definiert sind.

5. Automatisches Bremssystem nach einem der vorhergehenden Ansprüche, bei dem die ersten Zustände (17) einen deaktivierten Zustand (17a),
einen ersten aktivierten Zustand (17b), einen Voreingriffszustand (17c), einen ersten Eingriffszustand (17d) und einen Maximaleingriffszustand (17e) umfassen.

6. Automatisches Bremssystem nach einem der vorhergehenden Ansprüche, bei dem die zweiten Zustände (19) den deaktivierten Zustand, einen zweiten aktivierten Zustand (19b) und einen zweiten Eingriffszustand (19d) umfassen.

7. Automatisches Bremssystem nach Anspruch 5, bei dem ein Übergang (20) vom deaktivierten Zustand (17a) in den ersten aktivierten Zustand (17b) erfolgt, wenn das Luftfahrzeug vor der Landung des Luftfahrzeugs im Flug ist und ein Pilot des Luftfahrzeugs einen ersten automatischen Bremsmodus auswählt, der der Landung des Luftfahrzeugs entspricht.

8. Automatisches Bremssystem nach Anspruch 5, bei dem ein Übergang (20) vom ersten aktivierten Zustand (17b) in den Voreingriffszustand (17c) erfolgt, wenn das Luftfahrzeug den Boden berührt und die Unterschiede zwischen den Geschwindigkeiten einer Mehrzahl von Rädern des Luftfahrzeugs und einer Geschwindigkeit des Luftfahrzeugs kleiner oder gleich einem vorbestimmten ersten Geschwindigkeitsschwellenwert sind und ein automatischer Bremsbefehl empfangen wird.

9. Automatisches Bremssystem nach Anspruch 5, bei dem ein Übergang (20) vom Voreingriffszustand (17c) in den ersten Eingriffszustand (17d) erfolgt, wenn das Luftfahrzeug am Boden stabilisiert ist.

10. Automatisches Bremssystem nach Anspruch 5, bei dem ein Übergang (20) vom Voreingriffszustand (17c) oder vom ersten Eingriffszustand (17d) in den Maximaleingriffszustand (17e) erfolgt, wenn ein Risiko eines Verlassens der Rollbahn des Luftfahrzeugs erfasst wird, und bei dem ein Übergang vom Maximaleingriffszustand (17e) in den ersten Eingriffszustand (17d) erfolgt, wenn das genannte Risiko verschwindet.

11. Automatisches Bremssystem nach Anspruch 6, bei dem ein Übergang (20) vom deaktivierten Zustand (19a) in den zweiten aktivierten Zustand (19b) vor einer Startstrecke des Luftfahrzeugs erfolgt, wenn ein Pilot des Luftfahrzeugs einen zweiten automatischen Bremsmodus auswählt, der dem Startabbruch des Luftfahrzeugs entspricht.

12. Automatisches Bremssystem nach Anspruch 6, bei dem ein Übergang (20) vom zweiten aktivierten Zustand (19b) in den zweiten Eingriffszustand (19d) erfolgt, wenn ein automatischer Bremsbefehl empfangen wird und eine Geschwindigkeit des Luftfahrzeugs größer oder gleich einem vorbestimmten zweiten Geschwindigkeitsschwellenwert ist.

13. Automatisches Bremssystem nach den Ansprüchen 5 und 6, bei dem ein Übergang vom Voreingriffszustand (17c) oder vom ersten Eingriffszustand (17d) oder vom Maximaleingriffszustand (17e) oder vom zweiten Eingriffszustand (19d) in den deaktivierten Zustand (17a) erfolgt, wenn ein Pilot des Luftfahrzeugs einen Druck auf die Bremspedale ausübt, der größer als ein vorbestimmter Druckschwellenwert ist, oder auch wenn das Luftfahrzeug abhebt und die Fahrwerke des Luftfahrzeugs den Boden nicht mehr berühren.

14. Automatisches Bremssystem nach den Ansprüchen 5 und 6, bei dem ein Übergang von einem beliebigen besonderen Zustand, der zu den ersten Zuständen (17) oder den zweiten Zuständen (19) gehört, in den deaktivierten Zustand (17a) erfolgt, wenn ein Ausfall einer Ausrüstung, die zum Durchführen der automatischen Bremsung beiträgt, erfolgt, oder auch wenn ein Pilot des Luftfahrzeugs die automatische Bremsung manuell deaktiviert.

## Claims

1. Aircraft automatic braking system, comprising means (10) for acquiring deceleration rates (Rd) suitable for being imparted to the aircraft by the automatic braking system (9), and separate functional modules comprising:
- a first functional module (11) arranged in order to implement a state machine (15) that includes a first branch (16) comprising first states (17) corresponding to a landing of the aircraft, a second branch (18) comprising second states (19) corresponding to a rejected take-off of the aircraft, and transitions (20) between the first states (17) and the second states (19), the first states, the second states and the transitions being defined independently of the deceleration rates;
- a second functional module (12) arranged in order to define a target deceleration (Td) of the aircraft on the basis of at least the deceleration rates and a current state of the state machine (15), said current state being either one of the first states (17) or one of the second states (19);
- a third functional module (13) arranged in order to define, on the basis of at least the current state and the target deceleration, an automatic braking command (Comm) in order to control actuators of wheel brakes of the aircraft.

2. Automatic braking system according to Claim 1, the automatic braking system (9) being arranged in order to acquire external parameters (Pex) generated outside the automatic braking system (9) and representative of a state of the aircraft, the transitions (20) depending on first conditions defined on the basis of at least the external parameters (Pex).

3. Automatic braking system according to Claim 2, in which the second functional module (12) is arranged in order to define the target deceleration (Td) by also using the external parameters (Pex).

4. Automatic braking system according to Claim 2, also comprising a fourth functional module (14) arranged in order to produce consolidated parameters (Pc) on the basis of at least the external parameters (Pex) and a selected deceleration rate (Rds) chosen from the deceleration rates (Rd), the state machine (15) comprising at least one transition (20) depending on second conditions defined on the basis of at least the consolidated parameters (Pc).

5. Automatic braking system according to one of the previous claims, in which the first states (17) comprise a deactivated state (17a), a first activated state (17b), a pre-engaged state (17c), a first engaged state (17d), and a fully engaged state (17e).

6. Automatic braking system according to one of the previous claims, in which the second states (19) comprise the deactivated state, a second activated state (19b), and a second engaged state (19d).

7. Automatic braking system according to Claim 5, in which a transition (20) from the deactivated state (17a) to the first activated state (17b) occurs when the aircraft is in flight before the landing of the aircraft and a pilot of the aircraft selects a first automatic braking mode corresponding to the landing of the aircraft.

8. Automatic braking system according to Claim 5, in which a transition (20) from the first activated state (17b) to the pre-engaged state (17c) occurs when the aircraft touches down, and differences between speeds of most of the wheels of the aircraft and a speed of the aircraft are less than or equal to a first pre-determined speed threshold, and an automatic braking order is received.

9. Automatic braking system according to Claim 5, in which a transition (20) from the pre-engaged state (17c) to the first engaged state (17d) occurs when the aircraft is stabilized on the ground.

10. Automatic braking system according to Claim 5, in which a transition (20) from the pre-engaged state (17c) or the first engaged state (17d) to the fully engaged state (17e) occurs when a risk of the aircraft overrunning the runway is detected, and in which a transition from the fully engaged state (17e) to the first engaged state (17d) occurs when said risk disappears.

11. Automatic braking system according to Claim 6, in which a transition (20) from the deactivated state (19a) to the second activated state (19b) occurs before a take-off run of the aircraft when a pilot of the aircraft selects a second automatic braking mode corresponding to a rejected take-off of the aircraft.

12. Automatic braking system according to Claim 6, in which a transition (20) from the second activated state (19b) to the second engaged state (19d) occurs when an automatic braking order is received, and a speed of the aircraft is greater than or equal to a second pre-determined speed threshold.

13. Automatic braking system according to Claims 5 and 6, in which a transition from the pre-engaged state (17c) or the first engaged state (17d) or the fully engaged state (17e) or the second engaged state (19d) to the deactivated state (17a) occurs when a pilot of the aircraft exerts pressure on brake pedals that is greater than a pre-determined pressure threshold, or if the aircraft takes off and landing gear of the aircraft is no longer touching the ground.

14. Automatic braking system according to Claims 5 and 6, in which a transition from any particular state belonging to the first states (17) or to the second states (19) to the deactivated state (17a) occurs when a fault in equipment contributing to the implementation of the automatic braking occurs, or when a pilot of the aircraft manually deactivates automatic braking.
